# EUROPÄISCHE PATENTANMELDUNG

(11) **EP 3 798 108 A1**
(43) Veröffentlichungstag der Anmeldung: **31.03.2021**
(21) Anmeldenummer: 20194542.5
(22) Anmeldetag: 04.09.2020
(51) Int. Cl.: B62D 55/253, B62D 55/28

(54) **KETTENANORDNUNG FÜR EINE PISTENRAUPE**

(30) Priorität: 27.09.2019 DE 102019214851
(71) Anmelder: Kässbohrer Geländefahrzeug AG, 88471 Laupheim (DE)
(72) Erfinder: Bendele, Tobias, 89129 Nerenstetten (DE); Müller, Steffen, 89176 Asselfingen (DE)
(74) Vertreter: Patentanwälte Ruff, Wilhelm, Beier, Dauster & Partner mbB

(57) **Zusammenfassung**

2.1 Eine derartige Kettenanordnung mit mehreren parallel zueinander in Kettenlaufrichtung erstreckten Kettenbändern, die mittels quer zur Kettenlaufrichtung erstreckter Kettenstege miteinander verbunden sind, die außenseitig auf den Kettenbändern positioniert sind, wobei jedem Kettensteg jeweils ein Spurbügel zugeordnet ist, der entgegengerichtet zu dem Kettensteg nach innen ragt, ist bekannt.
2.2 Erfindungsgemäß ist jeder Spurbügel über wenigstens ein Kettenband erstreckt und mit dem Kettenband verbunden.
2.3 Einsatz für Pistenraupen.

## Beschreibung

Die Erfindung betrifft eine Kettenanordnung für eine Pistenraupe mit mehreren parallel zueinander in Kettenlaufrichtung erstreckten Kettenbändern, die mittels quer zur Kettenlaufrichtung erstreckter Kettenstege miteinander verbunden sind, die außenseitig auf den Kettenbändern positioniert sind, wobei jedem Kettensteg jeweils ein Spurbügel zugeordnet ist, der entgegengerichtet zu dem Kettensteg nach innen ragt.

Eine derartige Kettenanordnung ist bei Pistenraupen allgemein bekannt. Eine bekannte Kettenanordnung besteht aus mehreren, parallel zueinander verlaufenden, flexiblen Kettenbändern, die in montiertem Zustand der Kettenanordnung in Längsrichtung der Pistenraupe und damit in Kettenlaufrichtung verlaufen. Die parallel nebeneinander verlaufenden Kettenbänder sind über quer erstreckte Kettenstege miteinander verbunden, die in gleichmäßigen Abständen zueinander über die Länge der Kettenbänder verteilt angeordnet sind. Die Kettenstege sind derart quer zu der Laufrichtung der Kettenbänder auf diesen Kettenbändern befestigt, dass die Kettenstege in montiertem Zustand der Kettenanordnung etwa rechtwinklig zu der Ebene der Kettenbänder nach außen gerichtet sind. An jedem Kettensteg ist zudem ein entgegengerichtet zu der Ausrichtung des jeweiligen Kettenstegs nach innen weisender Spurbügel befestigt, der zur Führung der Kettenanordnung relativ zu einem Antriebsrad und relativ zu Laufrädern sowie zu einem Spannrad eines Kettenlaufwerks der Pistenraupe dient.

Aufgabe der Erfindung ist es, eine Kettenanordnung der eingangs genannten Art zu schaffen, die eine längere Haltbarkeit der Kettenstege ermöglicht.

Diese Aufgabe wird dadurch gelöst, dass jeder Spurbügel über wenigstens ein Kettenband erstreckt und mit dem Kettenband verbunden ist. Dadurch ist eine verbesserte Kraftübertragung zwischen einem Antriebsrad, d.h. einem Turasrad, eines Kettenlaufwerks einer Pistenraupe auf die Kettenanordnung ermöglicht. Zudem gewährleistet die direkte Einleitung von Antriebskräften des Antriebsrads vom Spurbügel auf das wenigstens eine Kettenband eine reduzierte Belastung des zugeordneten Kettenstegs, wodurch eine längere Haltbarkeit der Kettenstege ermöglicht ist. Der Spurbügel kann insbesondere an einem Kettenband oder an mehreren Kettenbändern befestigt sein. Zur Befestigung können mechanische Befestigungsmittel wie Schraubverbindungen oder Ähnliches, oder auch stoffschlüssige Verbindungen wie insbesondere Verklebungen vorgesehen sein. Ein Kettenband wird vorzugsweise durch ein stabiles Band aus einem Elastomermaterial wie insbesondere Kautschuk hergestellt. Die Erstreckung des Spurbügels über wenigstens ein Kettenband bedeutet, dass der Spurbügel wenigstens ein Kettenband zumindest teilweise überlagert. Unter der Verbindung mit dem Kettenband ist zu verstehen, dass im Betrieb der Kettenanordnung an einer Pistenraupe ein Kraftfluss zwischen dem Spurbügel und dem Kettenband erzielt wird. Unter der außenseitigen Positionierung der Kettenstege und der nach innen ragenden Richtung der Spurbügel ist die Ausrichtung an der Kettenanordnung in betriebsfertig an der Pistenraupe montiertem Zustand zu verstehen. Die Kettenstege ragen dabei von den umlaufenden Kettenbändern jeweils etwa orthogonal nach außen ab, während die Spurbügel nach innen zu entsprechenden Laufrädern sowie einem Spannrad und einem Turasrad gewandt sind, um die Führung und Mitnahme der Kettenanordnung relativ zu diesen Rädern zu erzielen. Durch die erfindungsgemäße Lösung ergibt sich ein direkter Kraftfluss vom Spurbügel, insbesondere über entsprechende Befestigungsmittel, zu dem wenigstens einen Kettenband. Aufgrund der reduzierten Belastung für die Kettenstege ist es möglich, die Kettenstege für geringere Belastungen auszulegen und demzufolge leichtgewichtiger zu gestalten. Eine entsprechende Materialreduzierung zur Herstellung der Kettenstege führt zwangsläufig auch dazu, dass die Kettenanordnung insgesamt leichter gebaut werden und demzufolge gegenüber bekannten Kettenanordnungen ein reduziertes Gewicht aufweisen kann. Die erfindungsgemäße Kettenanordnung weist vorzugsweise wenigstens zwei und maximal acht Kettenbänder auf.

In Ausgestaltung der Erfindung ist jeder Spurbügel zusätzlich an dem zugeordneten Kettensteg befestigt. Hierdurch ergibt sich im Betrieb der Kettenanordnung ein Kraftfluss vom Spurbügel sowohl in den Kettensteg als auch in das wenigstens eine Kettenband. Entsprechende Belastungen für den Kettensteg werden hierdurch reduziert.

In weiterer Ausgestaltung der Erfindung ist jeder Spurbügel mittels Schraubverbindungen mit dem wenigstens einen Kettenband verbunden. Ergänzend kann der Spurbügel mittels Schraubverbindungen auch mit dem zugeordneten Kettensteg verbunden sein. Schraubverbindungen gewährleisten eine lösbare Verbindung, d.h. eine lösbare Befestigung, wodurch sich ein Austausch verschlissener oder anderweitig beschädigter Komponenten ohne großen Aufwand bewerkstelligen lässt. Die Schraubverbindungen sind vorzugsweise so gestaltet, dass diese wenigstens ein Kettenband durchdringen und an einem dahinterliegenden Bauteil wie einem Kettensteg oder ähnlichem verschraubt sind.

In weiterer Ausgestaltung der Erfindung weist jeder Spurbügel zwei Radführungsschenkel sowie wenigstens einen von wenigstens einem Radführungsschenkel zur Seite wegragenden Verlängerungsabschnitt auf, der über wenigstens ein Kettenband hinweg erstreckt und mit dem Kettenband verbunden ist. Der Spurbügel ist vorzugsweise mittels wenigstens einer Schraubverbindung im Bereich des Verlängerungsabschnitts mit dem Kettenband verbunden. Ergänzend kann der Spurbügel über Befestigungselemente, insbesondere in Form von Schraubverbindungen, mit dem Kettensteg verbunden sein.

In weiterer Ausgestaltung der Erfindung ist wenigstens eine Schraubverbindung im Bereich des wenigstens einen Verlängerungsabschnitts vorgesehen. Die Schraubverbindung wird vorzugsweise durch eine Kopfschraube und eine in dem Kettensteg integrierte Gewindebohrung gebildet. Das Kettenband ist mit einem Durchtritt versehen, durch den die Kopfschraube zu der Gewindebohrung des Kettensteges hindurchragt.

In weiterer Ausgestaltung der Erfindung weist jeder Spurbügel zwei zu gegenüberliegenden Seiten hin abragende Verlängerungsabschnitte auf. Vorzugsweise sind die beiden Verlängerungsabschnitte identisch oder unterschiedlich zueinander gestaltet. Die identische oder unterschiedliche Gestaltung bezieht sich insbesondere auf eine Länge der Verlängerungsabschnitte. Der eine Verlängerungsabschnitt ist entweder länger gestaltet als der gegenüberliegende Verlängerungsabschnitt, oder aber beide Verlängerungsabschnitte weisen eine identische Länge auf. Bei einem Spurbügel mit unterschiedlich langen Verlängerungsabschnitten wird von einem asymmetrischen Spurbügel, bei einem Spurbügel mit gleich langen Verlängerungsabschnitten von einem symmetrischen Spurbügel gesprochen. Demzufolge weisen die Verlängerungsabschnitte vorteilhaft unterschiedliche oder gleiche Längen auf.

In weiterer Ausgestaltung der Erfindung weist jede Schraubverbindung eine Kopfschraube auf, die in eine Gewindebohrung des Kettenstegs eingeschraubt ist. Ein Schraubenkopf der Kopfschraube stützt sich in montiertem Zustand an einer Stützfläche des Spurbügels, entweder im Bereich eines Verlängerungsabschnitts oder im Bereich zwischen den Radführungsschenkeln, ab. Die Gewindebohrung kann alternativ in einer in dem Kettenband integrierten Metallhülse oder in einer Gewindemutter vorgesehen sein, die sich auf einer zu der Stützfläche für den Schraubenkopf gegenüberliegenden Stützfläche des Kettenbands oder des Kettenstegs abstützt.

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind.
- Fig. 1: zeigt in einer Frontansicht eine Pistenraupe mit einer links- und einer rechtsseitigen Kettenanordnung,
- Fig. 2: eine Draufsicht auf einen Teilbereich einer Ausführungsform einer erfindungsgemäßen Kettenanordnung mit insgesamt sieben Kettenbändern, die parallel zueinander in Kettenlaufrichtung ausgerichtet sind,
- Fig. 3: in vergrößerter Darstellung einen Schnitt durch die Kettenanordnung gemäß Fig. 2 entlang der Schnittlinie III-III,
- Fig. 4: in einer Schnittdarstellung analog Fig. 3 eine weitere Ausführungsform einer erfindungsgemäßen Kettenanordnung ähnlich Fig. 3,
- Fig. 5: in einer Schnittdarstellung analog den Fig. 3 und 4 eine weitere Ausführungsform einer erfindungsgemäßen Kettenanordnung ähnlich Fig. 4 und
- Fig. 6: in analoger Schnittdarstellung zu den Fig. 3 bis 5 eine weitere Ausführungsform einer erfindungsgemäßen Kettenanordnung ähnlich Fig. 5.

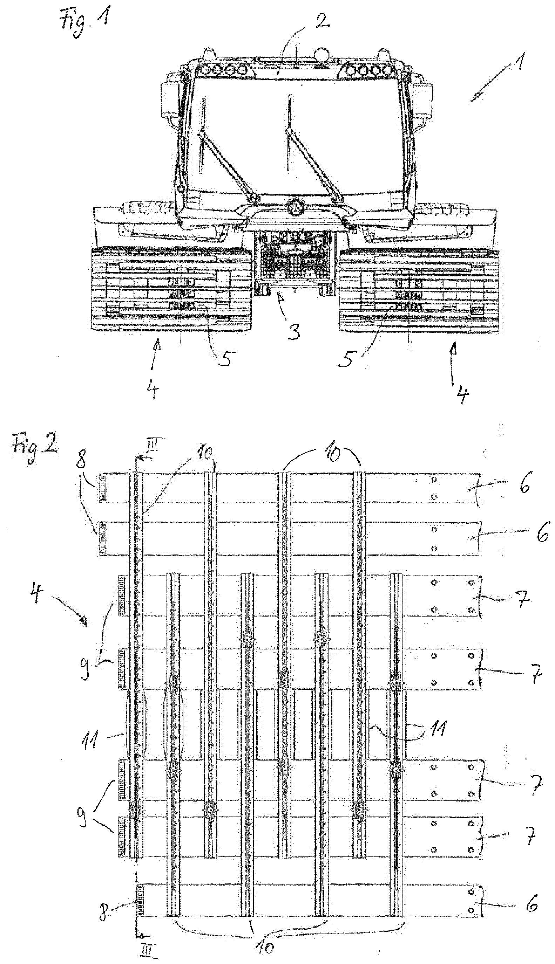

Eine Pistenraupe 1 gemäß Fig. 1 weist in grundsätzlich bekannter Weise einen Fahrwerksrahmen 3 auf, auf dem frontseitig ein Fahrerhaus 2 angeordnet ist. Zur Fortbewegung der Pistenraupe 1 ist beidseitig des Fahrwerksrahmens jeweils ein Kettenlaufwerk vorgesehen, das jeweils eine umlaufende Kettenanordnung 4 aufweist. Jede Kettenanordnung 4 ist im montierten Zustand umlaufend um ein frontseitiges Spannrad, mehrere hintereinander angeordnete Laufräder sowie ein heckseitiges Antriebsrad (Turasrad) des Kettenlaufwerks herumgelegt. Anhand der Fig. 1 ist ein frontseitiges Spannrad 5 unterhalb jeder Kettenanordnung 4 erkennbar.

Jede Kettenanordnung 4 weist mehrere in Kettenlaufrichtung, d.h. in Fahrtrichtung der Pistenraupe 1, parallel zueinander erstreckte, umlaufende Kettenbänder 6, 7 auf, wobei die Kettenbänder 6, 7 als stabile, aber flexible Kunststoffbänder, insbesondere unter Nutzung einer Gummimischung, gestaltet sind. Jedes Kettenband 6, 7 wird mittels eines Kettenschlosses 8, 9, das stirnseitig an Bandenden jedes Kettenbands 6, 7 vorgesehen ist, zu einem endlos umlaufenden Kettenband ausgeführt. Wie anhand der Fig. 2 erkennbar ist, sind bei der dargestellten Ausführungsform insgesamt sieben Kettenbänder 6, 7 vorgesehen, wobei vier Kettenbänder 7 - jeweils identisch zueinander - breiter gestaltet sind als die drei verbleibenden Kettenbänder 6, die ebenfalls relativ zueinander identisch ausgeführt sind.

Die gegenüberliegenden Kettenanordnungen 4 der Pistenraupe 1 beidseitig des Fahrwerksrahmens 3 sind identisch zueinander gestaltet, jedoch spiegelsymmetrisch relativ zu einer vertikalen Fahrzeugmittellängsebene angeordnet.

Die in Kettenlaufrichtung und damit in Fahrzeuglängsrichtung erstreckten Kettenbänder 6, 7 sind mittels einer Vielzahl von Kettenstegen 10 miteinander verbunden, die orthogonal zur Laufrichtung der Kettenbänder 6, 7 und damit in Fahrzeugquerrichtung ausgerichtet und außenseitig auf die Kettenbänder 6, 7 aufgesetzt sind. Wie anhand der Fig. 2 erkennbar ist, sind die Kettenstege 10 alternierend mit sechs Kettenbändern 6, 7 oder mit fünf Kettenbändern 6, 7 verbunden. In Fig. 2 weist ein unterer Bildrand zur Fahrzeugmitte der Pistenraupe 1 und ein oberer Bildrand in Fahrzeugquerrichtung zur Außenseite der Pistenraupe 1. Demzufolge sind die in Fig. 2 dargestellten Kettenstege 10, ausgehend von dem - von links gesehen - zweiten Kettensteg 10 mit dem jeweils innersten schmalen Kettenband 6 sowie den nach außen in Fahrzeugquerrichtung anschließenden vier breiten Kettenbändern 7 verbunden. Gleiches gilt für den von links gesehen vierten, sechsten und achten Kettensteg 10. Der von links gesehen in Fig. 2 erste, dritte, fünfte und siebte Kettensteg 10 ist mit den beiden außenliegenden, schmalen Kettenstegen 6 sowie mit den vier breiten Kettenstegen 7 verbunden.

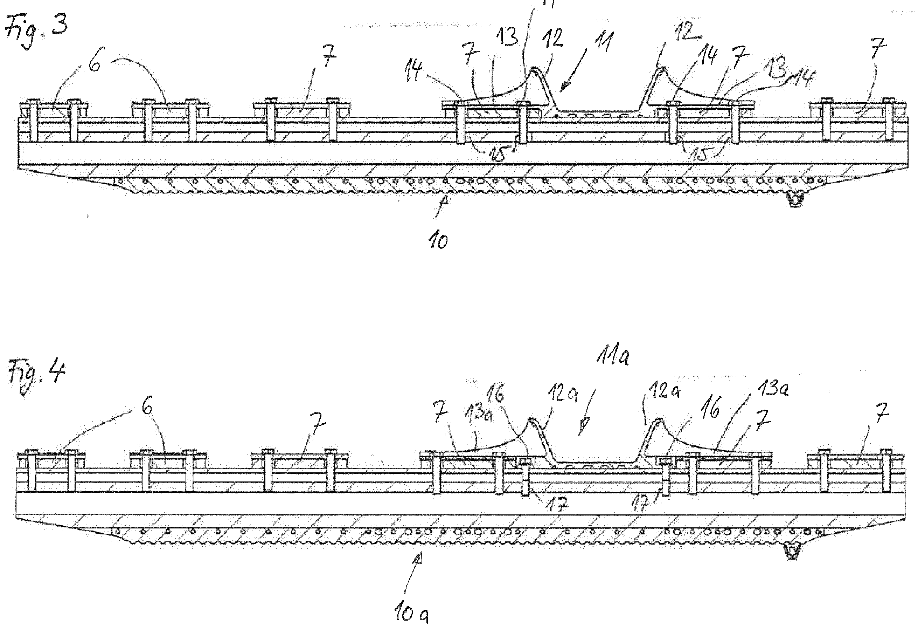

Allen Kettenstegen 10 sind mittig zwischen den insgesamt vier breiten Kettenbändern 7 Spurbügel 11 zugeordnet, die anhand der Fig. 3 bis 6 näher beschrieben werden. Die Spurbügel 11 sind in Kettenlaufrichtung und damit in Fahrzeuglängsrichtung in einer gemeinsamen Flucht zueinander ausgerichtet und erstrecken sich analog der Kettenstege 10 quer zur Kettenlaufrichtung und damit in Fahrzeugquerrichtung. Die Kettenstege 10 sind außenseitig auf die Kettenbänder 6, 7 aufgebracht. Die Spurbügel 11 hingegen ragen zur gegenüberliegenden Seite, d.h. nach innen, von den Kettenstegen 10 und den Kettenbändern 6, 7 ab.

Anhand der Fig. 3 bis 6 werden unterschiedliche Ausführungsformen von Spurbügeln 11, 11a, 11b, 11c und zugeordneten Kettenstegen 10, 10a, 10b, 10c gezeigt. Alle Ausführungsformen sind Teil von erfindungsgemäßen Kettenanordnungen. Nachfolgend werden die verschiedenen Ausführungsformen im Detail beschrieben.

Anhand der Fig. 3 bis 6 ist erkennbar, dass die Kettenstege 10, 10a, 10b, 10c jeweils nach unten weisen, so dass die gezeigten Schnittdarstellungen jeweils ein Untertrum einer erfindungsgemäßen Kettenanordnung zeigen. Dabei sind die Kettenstege 10, 10a, 10b, 10c jeweils entlang von sechs Kettenbändern 6, 7 erstreckt, da der Schnitt entlang der Schnittlinie III-III in Fig. 2 gezogen wurde. Eine Gestaltung von Spurbügeln 11, 11a, 11b, 11c und Kettenstegen 10, 10a, 10b, 10c ändert sich aber nicht grundlegend, wenn entsprechende Spurbügel und Kettenstege über eine reduzierte oder eine größere Anzahl von Kettenbändern erstreckt ist.

Anhand der Fig. 3 ist erkennbar, dass der Kettensteg 10 mithilfe von nicht näher bezeichneten Schraubverbindungen mit den drei in Fig. 3 linken Kettenbändern 6, 7 und mit dem in Fig. 3 rechten Kettenband 7 verbunden ist. Hierzu weisen die Kettenbänder 6, 7, wie auch anhand der Fig. 2 erkennbar ist, nicht näher bezeichnete Durchtritte auf, durch die hindurch von oben her - auf die Darstellung der Fig. 3 bezogen - Kopfschrauben hindurchgesteckt sind, die mit komplementären Gewindebohrungen im Bereich der Unterseite des Kettenstegs 10 verschraubt sind. Entsprechende Schraubenköpfe der Kopfschrauben stützen sich auf Trägerplatten ab, die ebenfalls nicht näher bezeichnet sind und auf der Oberfläche der Kettenbänder 6, 7 aufliegen.

Zwischen dem von links gesehen vierten und fünften Kettenband 7 ist der Spurbügel 11 angeordnet, der zwei in Fig. 3 nach oben ragende Radführungsschenkel 12 aufweist, zwischen denen ein Stützbereich des Spurbügels 11 erstreckt ist. Von den Radführungsschenkeln 12 jeweils quer zur Laufrichtung der Kettenbänder 6, 7 nach außen bzw. nach innen erstreckt sich jeweils ein Verlängerungsabschnitt 13, der analog der zuvor beschriebenen Trägerplatten über jeweils eine Oberfläche des jeweiligen Kettenbands 7 erstreckt ist. In dem jeweiligen Verlängerungsabschnitt 13 sind Durchtritte für Schraubverbindungen vorgesehen, die durch Kopfschrauben 14 gebildet sind, die wiederum in Gewindebohrungen des Kettenstegs 10 eingeschraubt sind. Die Kopfschrauben 14 durchdringen entsprechende Durchtritte des jeweiligen Kettenbands 7.

Der Spurbügel 11 ist demzufolge sowohl mit den beiden Kettenbändern 7 als auch mit dem Kettensteg 10 verbunden. Entsprechende Gewindebohrungen des Kettenstegs 10 zur Aufnahme der Kopfschrauben 14 sind in Fig. 3 mit den Bezugszeichen 15 versehen.

Bezüglich der Ausführungsformen gemäß den Fig. 4 bis 6 wird nachfolgend auf die Unterschiede zu der Baueinheit gemäß Fig. 3 eingegangen. Bei der Ausführungsform gemäß Fig. 4 ist ein Spurbügel 11a mit dem zugehörigen Kettensteg 10a nicht nur über die die Kettenbänder 7 durchdringenden Schraubverbindungen, sondern auch mittels zusätzlicher Schraubverbindungen 16 mit dem Kettensteg 10a verbunden, die direkt den Spurbügel 11a auf der Rückseite des Kettenstegs 10a fixieren. Der Spurbügel 11a weist analog der Ausführungsform gemäß Fig. 3 zwei zu gegenüberliegenden Seiten von dem jeweiligen Radführungsschenkel 12a aus nach außen abragende Verlängerungsabschnitte 13a auf, die analog dem Spurbügel 11 einstückige Bestandteile des Spurbügels 11a sind. Die Verlängerungsabschnitte 13a sind analog der Ausführungsform nach Fig. 3 über Schraubverbindungen mit den beiden Kettenbändern 7 und mit dem Kettensteg 10a verbunden. Ergänzend ist der Spurbügel 11a gemäß Fig. 4 mit seinen Verlängerungsabschnitten 13a etwas breiter gestaltet als der Spurbügel 11 gemäß Fig. 3. Die Schraubverbindungen 16, 17 zwischen dem Spurbügel 11a und dem Kettensteg 10a sind unmittelbar neben dem jeweiligen Kettenband 7 positioniert, wie der Fig. 4 zu entnehmen ist. Dadurch ist der Spurbügel 11a insgesamt über sechs Schraubverbindungen mit dem Kettensteg 10a verbunden, wobei zwei Schraubverbindungen 16, 17 eine direkte Verbindung zwischen dem Spurbügel 11a und dem Kettensteg 10a bewirken, während die verbleibenden Schraubverbindungen die Verlängerungsabschnitte 13a unter Zwischenfügung der Kettenbänder 7a mit dem Kettensteg 10a verbinden.

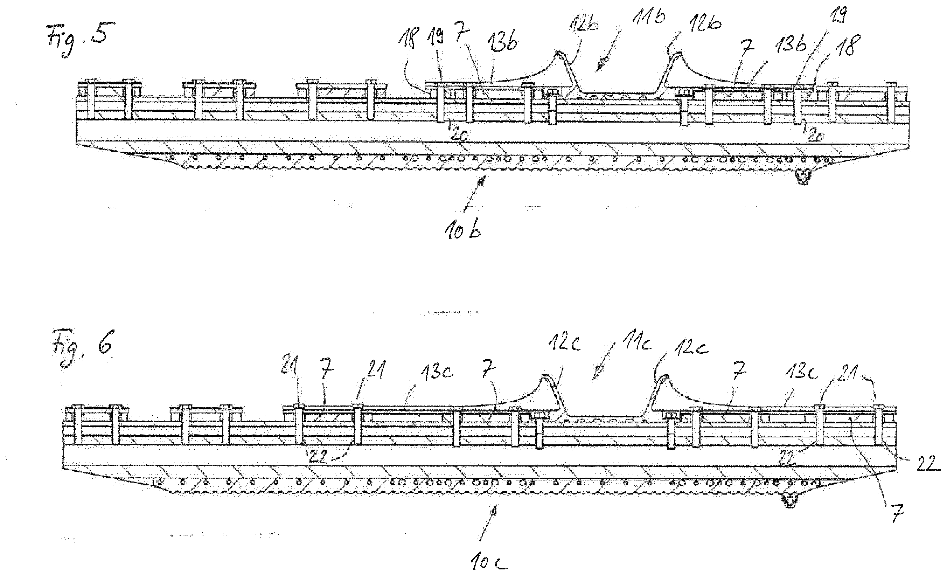

Die Ausführungsform gemäß Fig. 5 entspricht im Wesentlichen der Ausführungsform gemäß Fig. 4. Einziger Unterschied ist es, dass die Verlängerungsabschnitte 13b, die zu gegenüberliegenden Seiten von den Radführungsschenkeln 12b des Spurbügels 11b abragen, gegenüber der Ausführungsform gemäß Fig. 4 noch etwas länger gestaltet sind. Hierdurch wird jeder Verlängerungsabschnitt 13b mithilfe von jeweils vier Schraubverbindungen mit dem Kettensteg 10b verbunden, wobei eine Schraubverbindung unmittelbar unterhalb des jeweiligen Radführungsschenkels 12b jeweils analog der Ausführungsform nach Fig. 4 eine direkte Verbindung des Spurbügels 11b zu dem Kettensteg 10b bildet, während die anderen Schraubverbindungen jeweils zwischen den jeweiligen Verlängerungsabschnitt 13b und die zugewandte Unterseite des Kettenstegs 10b noch ein weiteres Funktionselement einklemmen. Dies sind bezüglich der beiden mittleren Schraubverbindungen im Bereich jedes Verlängerungsabschnitts 13b die Kettenbänder 7 analog der Ausführungsform nach Fig. 4. Die jeweils zeitlich außenliegenden Schraubverbindungen 19, 20 hingegen durchdringen eine Stützplatte 18, deren Höhe zumindest weitgehend der Höhe des jeweiligen Kettenbands 7 entspricht. Auch die Schraubverbindungen 19, 20 werden durch Kopfschrauben 19 und durch entsprechende Gewindebohrungen 20 im Bereich des Kettenstegs 10b gebildet.

Bei der Ausführungsform gemäß Fig. 6 erstrecken sich Verlängerungsabschnitte 13c des Spurbügels 11c jeweils über zwei Kettenbänder 7. Jeder Verlängerungsabschnitt 13c ist demzufolge über vier Schraubverbindungen durch jeweils zwei Kettenbänder 7 hindurch mit dem Kettensteg 10c verbunden. Die seitlich äußeren Schraubverbindungen 21, 22 sind in Fig. 6 näher bezeichnet. Dabei handelt es sich um Kopfschrauben 21, die das Kettenband 7 im Bereich von Durchtritten durchdringen und in Gewindebohrungen 22 des Kettenstegs 10c eingeschraubt sind. Ergänzend ist der Spurbügel 11c über die zwei Schraubverbindungen direkt mit dem Kettensteg 10c verschraubt, die unterhalb der Radführungsschenkel 12c positioniert sind, analog den Schraubverbindungen 16, 17 in Fig. 4.

## Patentansprüche

1. Kettenanordnung (4) für eine Pistenraupe (1) mit mehreren parallel zueinander in Kettenlaufrichtung erstreckten Kettenbändern (6, 7), die mittels quer zur Kettenlaufrichtung erstreckter Kettenstege (10, 10a, 10b, 10c) miteinander verbunden sind, die außenseitig auf den Kettenbändern (6, 7) positioniert sind, wobei jedem Kettensteg (10, 10a, 10b, 10c) jeweils ein Spurbügel (11, 11a, 11b, 11c) zugeordnet ist, der entgegengerichtet zu dem Kettensteg (10, 10a, 10b, 10c) nach innen ragt, **dadurch gekennzeichnet, dass** jeder Spurbügel (11, 11a, 11b, 11c) über wenigstens ein Kettenband (6, 7) erstreckt und mit dem Kettenband (6, 7) verbunden ist.

2. Kettenanordnung (4) nach Anspruch 1, **dadurch gekennzeichnet, dass** jeder Spurbügel (11, 11a, 11b, 11c) zusätzlich an dem zugeordneten Kettensteg (10, 10a, 10b, 10c) befestigt ist.

3. Kettenanordnung (4) nach Anspruch 1 oder 2, **dadurch gekennzeichnet, dass** jeder Spurbügel (11, 11a, 11b, 11c) mittels Schraubverbindungen (14, 15; 19, 20, 21, 22) mit dem wenigstens einen Kettenband (6, 7) verbunden ist.

4. Kettenanordnung (4) nach einem der vorhergehenden Ansprüche, **dadurch gekennzeichnet, dass** jeder Spurbügel (11, 11a, 11b, 11c) zwei Radführungsschenkel (12, 12a, 12b, 12c) sowie wenigstens einen von wenigstens einem Radführungsschenkel (12, 12a, 12b, 12c) zur Seite wegragenden Verlängerungsabschnitt (13, 13a, 13b, 13c) aufweist, der über wenigstens ein Kettenband (6, 7) hinweg erstreckt und mit dem Kettenband (6, 7) verbunden ist.

5. Kettenanordnung (4) nach Anspruch 4, **dadurch gekennzeichnet, dass** wenigstens eine Schraubverbindung (14, 15; 18, 19, 21, 22) im Bereich des wenigstens einen Verlängerungsabschnitts (13, 13a, 13b, 13c) vorgesehen ist.

6. Kettenanordnung (4) nach einem der vorhergehenden Ansprüche, **dadurch gekennzeichnet, dass** jeder Spurbügel (11, 11a, 11b, 11c) zwei zu gegenüberliegenden Seiten hin abragende Verlängerungsabschnitte (13, 13a, 13b, 13c) aufweist.

7. Kettenanordnung (4) nach Anspruch 6, **dadurch gekennzeichnet, dass** die Verlängerungsabschnitte (13, 13a, 13b, 13c) unterschiedliche oder gleiche Längen aufweisen.

8. Kettenanordnung (4) nach einem der vorhergehenden Ansprüche, **dadurch gekennzeichnet, dass** jede Schraubverbindung eine Kopfschraube (14, 19, 21) aufweist, die in eine Gewindebohrung (15, 20, 22) des Kettenstegs (10, 10a, 10b, 10c) eingeschraubt ist.
